# EUROPÄISCHE PATENTANMELDUNG

(11) **EP 1 804 366 A2**
(43) Veröffentlichungstag der Anmeldung: **04.07.2007**
(21) Anmeldenummer: 06015954.8
(22) Anmeldetag: 01.08.2006
(51) Int. Cl.: H02K 21/24

(54) **Elektromagnetischer Drehbetätiger**

(30) Priorität: 29.12.2005 DE 102005063040
(71) Anmelder: Gustav Wahler GmbH u. Co.KG, 73730 Esslingen (DE)
(72) Erfinder: Bender, Franz, 73240 Wendlingen (DE)
(74) Vertreter: Kratzsch, Volkhard

(57) **Zusammenfassung**

Die Erfindung betrifft einen elektromagnetischen Drehbetätiger (10), mit einem oder mehreren in etwa gleichen Umfangswinkelabständen voneinander um eine Längsmittelachse (34) gruppierten Elektromagnet-Bauelementen (21) mit jeweils einem eine Spulenwicklung (22) tragenden Spulenkern (23) mit stirnseitiger Polfläche (24) und mit einem Rotor (30, 31) mit Rotorscheibe (32), die etwa parallel zu den stirnseitigen Polflächen (24) und in Abstand davon angeordnet ist und die in gleichmäßigen Umfangswinkelabständen mit entgegengesetzter Polarität aufeinanderfolgende Permanentmagnete aufweist, die mit ihren Polflächen (33) den stirnseitigen Polflächen (24) der Spulenkerne (23) gegenüberliegend ausgerichtet sind. Der Durchmesser der Rotorscheibe (32) ist so groß gewählt, dass diese (32) die Spulenwicklungen (22) in radialer Richtung zumindest teilweise überdeckt (Fig. 1).

## Beschreibung

Die Erfindung bezieht sich auf einen elektromagnetischen Drehbetätiger mit den Merkmalen im Oberbegriff des Anspruchs 1.

Elektromagnetische Drehbetätiger dieser Art sind bekannt. Sie weisen generell einen undrehbaren Stator auf, der ein erstes Magnetfeld erzeugt. Der Stator weist einen oder mehrere Spulenkerne aus einem Material mit hoher magnetischer Permeabilität auf, die jeweils mit einer Spulenwicklung versehen sind. Ferner ist ein Rotor vorgesehen mit einer axial magnetisierten Rotorscheibe, die ein zweites Magnetfeld erzeugt und die 2N Paar alternierend magnetisierte permmanentmagnetische Pole aufweist und an einem Drehteil aus einem Material mit hoher magnetischer Permeabilität befestigt ist. An diesem Rotor greift eine den Stator im Zentrum durchsetzende Welle an, über die das bei der Drehbetätigung des Rotors erzeugte Drehmoment an ein zu betätigendes Element, z.B. Ventil, weitergeleitet wird.

Ein derartiger elektromagnetischer Drehbetätiger ist z.B. aus EP 0642704 B1 bekannt. Die Rotorscheibe hat hierbei einen Durchmesser, der identisch mit dem Durchmesser der Spulenkerne ist, über den die Spulenwicklungen in radialer Richtung hinausragen.

Der Erfindung liegt die Aufgabe zugrunde, bei einem elektromagnetischen Drehbetätiger der eingangs genannten Art mit einfachen Mitteln eine Leistungssteigerung hinsichtlich des erzeugbaren Drehmoments zu erreichen.

Die Aufgabe ist bei einem elektromagnetischen Drehbetätiger der eingangs genannten Art gemäß der Erfindung durch die Merkmale im Anspruch 1 gelöst. Vorteilhafte weitere Erfindungsmerkmale und Ausgestaltungen ergeben sich aus den Ansprüchen 2 bis 5. Dadurch, dass der Durchmesser der Rotorscheibe so groß gewählt ist, dass die Rotorscheibe die Spulenwicklungen in radialer Richtung zumindest teilweise überdeckt, wird mit einfachen Mitteln eine Steigerung der Leistung durch entsprechend höheres erzeugbares Drehmoment erreicht. Es hat sich gezeigt, dass eine Leistungssteigerung in der Größenordnung z.B. von etwa 30 % erzielbar ist. Der hierfür nötige Aufwand ist außerordentlich gering. Es bedarf lediglich einer im Durchmesser größeren Rotorscheibe mit entsprechendem, diese tragenden Drehteil des Rotors bei entsprechend dimensioniertem Stator. Bei erfindungsgemäß im Durchmesser größerer Rotorscheibe wird das auch im Außenbereich der Spulenwicklung des Stators erzeugte Magnetfeld genutzt. Das erzeugte Magnetfeld des Stators hat in Wechselwirkung mit dem Magnetfeld des Rotors eine relative Drehung des Rotors zur Folge. Die Nutzung dieses auch im Bereich des Außenrandes der Spulenwicklungen erzeugten magnetischen Drehfeldes durch die hinsichtlich des Durchmessers größer gewählte Rotorscheibe hat die besagte Leistungssteigerung zur Folge.

Ein eigenständiger Erfindungsgegenstand ergibt sich ferner aus den Ansprüchen 6 und 7. Dadurch, dass der Rotor nicht fest mit der Welle verbunden ist, ist ein relatives Spiel zwischen dem Rotor und der Welle und dadurch ein Toleranzausgleich möglich. Die Gefahr eines etwaigen Klemmens der drehbar gelagerten Welle ist beseitigt. Durch das Gelenkspiel der Kupplung zwischen Rotor und Welle ist ferner erreichbar, dass die Polflächen des Stators und des Rotors möglichst genau parallel zueinander verlaufen. Dadurch werden Drehmomentverluste durch etwaige Unparallelität vermieden. Es ergibt sich ein möglichst geradliniger Drehmomentverlauf, und dies mit einfachen Mitteln.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Es zeigen:
- Fig. 1: einen schematischen axialen Schnitt mit teilweiser Draufsicht eines Teils eines elektromagnetischen Drehbetätigers,
- Fig.2: eine schematische stirnseitige und vereinfache Ansicht des Drehbetätigers in Fig. 1.

In den Zeichnungen ist ein elektrischer Drehbetätiger 10 gezeigt, der als magnetischer Drehantrieb vielfältig Verwendung finden kann, z.B. zur Drehbetätigung von Ventilen. Der Drehbetätiger 10 ist einphasig und erzeugt ein konstantes Moment. Er besteht generell aus einem Stator 20 und einem Rotor 30 in einem z.B. aus Kunststoff bestehenden Gehäuse 11 mit zylindrischer Wandung 12 und Stirndeckel 13. Der Stator 20 weist ein oder mehrere Elektromagnet-Bauelemente 21 mit jeweils einem eine Spulenwicklung 22 tragenden Spulenkern 23 mit stirnseitiger Polfläche 24 auf. Die Spulenkerne 23 bestehen aus einem Material mit hoher magnetischer Permeabilität. Der so gestaltete Stator 20 bildet einen ersten magnetischen Statorkreis und erzeugt bei Erregung ein erstes Magnetfeld.

Der Rotor 30 weist ein Drehteil 31 mit daran fester Rotorscheibe 32 auf, die nur schematisch angedeutet ist. Die Rotorscheibe 32 ist etwa parallel zur jeweiligen stirnseitigen Polfläche 24 des jeweiligen Spulenkerns 23 und in Abstand davon angeordnet. Die Rotorscheibe 32 weist in gleichmäßigen Umfangswinkelabständen mit entgegengesetzter Polarität aufeinanderfolgende Permanentmagnete auf, die mit ihren Polflächen 33 den stirnseitigen Polflächen 24 der Spulenkerne 23 gegenüberliegend ausgerichtet sind. Der Drehteil 31 besteht aus einem Material mit hoher magnetischer Permeabilität. Der so gestaltete Rotor 30 bildet einen zweiten Magnetkreis und erzeugt ein zweites Magnetfeld. Der Stator 20 und der Rotor 30 sind in Bezug auf eine Längsmittelachse 34 koaxial und mit kleinem Luftspalt zwischen den Polflächen 24 und 33 angeordnet. Durch die Wechselwirkung der beiden Magnetfelder wird ein Drehmoment am Rotor 30 erzeugt.

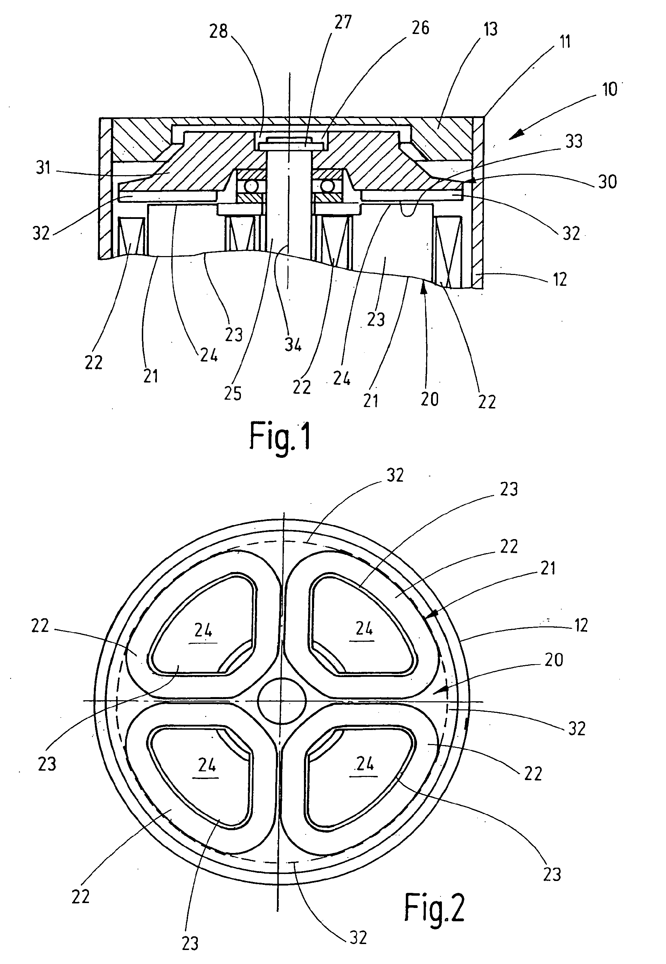

Wie insbesondere aus Fig. 1 ersichtlich ist, ist der Durchmesser der Rotorscheibe 32 so groß gewählt, dass die Rotorscheibe 32 die Spulenwicklungen 22 in radialer Richtung zumindest teilweise überdeckt. Der Durchmesser des Drehteils 31 ist in Anpassung an denjenigen der Rotorscheibe 32 gewählt. Dabei kann es ausreichend sein, wenn die Rotorscheibe 32 die Spulenwicklungen 22 in radialer Richtung zumindest überwiegend überdeckt. Beim gezeigten Ausführungsbeispiel ist der Durchmesser der Rotorscheibe 32 so gewählt, dass sich diese radial bis zur äußeren Ringkontur der Spulenwicklungen 22 erstreckt. Dies ist in Fig. 2 gestrichelt angedeutet. Wie daraus ersichtlich ist, schließt hierbei die Rotorscheibe 32 in Radialrichtung mit der äußeren Ringkontur der Spulenwicklungen 22 ab. Bei einem anderen, nicht gezeigten Ausführungsbeispiel kann die Rotorscheibe 32 über diese äußere Ringkontur auch noch hinausreichen. Der Durchmesser der Rotorscheibe 32 ist somit größer als der Durchmesser der Pole, insbesondere Spulenkerne 23, des Stators 20 gewählt, beim gezeigten Ausführungsbeispiel so groß, dass die Rotorscheibe 32 sich radial über die Spulenkerne 23 hinaus erstreckt.

Dadurch, dass der Durchmesser der Rotorscheibe 32 in beschriebener Weise groß gewählt ist, wird bei Erregung der Elektromagnet-Bauelemente 21 ein wesentlich größeres magnetisches Feld am Rotor 30 erzeugt. Dies hat ein erheblich größeres Moment am Rotor 30 als Drehstellmoment zur Folge. Es wurde festgestellt, dass sich aufgrund dieser im Durchmesser größeren Rotorscheibe 32 eine Steigerung des erreichbaren Drehmoments in der Größenordnung von z.B. 30 % erreichen lässt. Der hierzu erforderliche Aufwand ist außerordentlich gering, da sich dieser auf die Vergrößerung des Durchmessers der Rotorscheibe 32 und des Drehteils 31 beschränkt bei entsprechend dimensioniertem Stator 20.

Der Stator 20 ist im Zentrum von einer Welle 25 durchsetzt, die bis zum Rotor 30 führt und an diesem angreift. Die Welle 25 ist mit dem Rotor 30 nicht fest verbunden, sondern relativ beweglich, jedoch drehmomentübertragend, gekuppelt. Hierzu dient eine nur schematisch angedeutete drehmomentübertragende Kupplung 26 zwischen der Welle 25 und dem Rotor 30, die ein Gelenkspiel zwischen der Welle 25 und dem Rotor 30 ermöglicht und hierbei in Umfangsrichtung eine formschlüssige Drehverbindung herstellt. Diese nur schematisch angedeutete Kupplung 26 kann vielfältig gestaltet sein. Dem Fachmann stehen hierzu alle Gestaltungsmöglichkeiten einer solchen Kupplung zur Verfügung. Nur schematisch ist beim gezeigten Ausführungsbeispiel als eine Gestaltungsform einer solchen Kupplung 26 eine solche Anordnung gezeigt, bei der am Ende der Welle 25 ein damit verbundener Querbolzen 27 vorgesehen ist, der in einem entsprechenden Querschlitz 28 des Drehteils 31 aufgenommen ist. Der Querschlitz 28 ist in Fig. 1 nach oben hin offen, so dass bei der Montage die Welle 25 durch den Rotor 30 hindurchgesteckt und mit dem Querbolzen 27 in den entsprechend ausgerichteten Querschlitz 28 eingebracht werden kann, wodurch die formschlüssige und drehmomentübertragende Kupplung zwischen der Welle 25 und dem Rotor 30 in einfacher Weise hergestellt ist. Dadurch, dass die Welle 25 mit dem Rotor 30 nicht fest verbunden, sondern in beschriebener Weise beweglich gekuppelt ist, ist zumindest in Grenzen eine Relativbewegung zwischen der Welle 25 und dem Rotor 30 möglich, wodurch z.B. geringe Fluchtungsfehler bei der Lagerung der Welle 25 selbsttätig ausgeglichen werden. Aufgrund dessen ist z.B. die Gefahr eines etwaigen Klemmens der Welle 25, insbesondere bei längerer Ausbildung, beseitigt. Die drehmomentübertragende, ansonsten jedoch lose Verbindung zwischen der Welle 25 und dem Rotor 30 gewährleistet eine hohe Parallelität der Polflächen 24 und 33 mit sich ergebendem geradlinigen Drehmomentverlauf. Etwaige Drehmomentverluste aufgrund von Unparallelitäten werden somit in einfacher Weise verhindert.

## Patentansprüche

1. Elektromagnetischer Drehbetätiger, mit einem oder mehreren in etwa gleichen Umfangswinkelabständen voneinander um eine Längsmittelachse (34) gruppierten Elektromagnet-Bauelementen (21) mit jeweils einem eine Spulenwicklung (22) tragenden Spulenkern (23) mit stirnseitiger Polfläche (24) und mit einem Rotor (30, 31) mit Rotorscheibe (32), die etwa parallel zu den stirnseitigen Polflächen (24) und in Abstand davon angeordnet ist und die in gleichmäßigen Umfangswinkelabständen mit entgegengesetzter Polarität aufeinanderfolgende Permanentmagnete aufweist, die mit ihren Polflächen (33) den stirnseitigen Polflächen (24) der Spulenkerne (23) gegenüberliegend ausgerichtet sind,
**dadurch gekennzeichnet,**
**dass** der Durchmesser der Rotorscheibe (32) so groß gewählt ist, dass die Rotorscheibe (32) die Spulenwicklungen (22) in radialer Richtung zumindest teilweise überdeckt.

2. Elektromagnetischer Drehbetätiger nach Anspruch 1,
**dadurch gekennzeichnet,**
**dass** die Rotorscheibe (32) die Spulenwicklungen (22) in radialer Richtung zumindest überwiegend überdeckt.

3. Elektromagnetischer Drehbetätiger nach Anspruch 1 oder 2,
**dadurch gekennzeichnet,**
**dass** die Rotorscheibe (32) sich radial bis zur äußeren Ringkontur der Spulenwicklungen (22) erstreckt.

4. Elektromagnetischer Drehbetätiger nach einem der Ansprüche 1 bis 3,
**dadurch gekennzeichnet,**
**dass** die Rotorscheibe (32) radial über die äußere Ringkontur der Spulenwicklungen (22) hinausreicht.

5. Elektromagnetischer Drehbetätiger nach einem der Ansprüche 1 bis 4,
**dadurch gekennzeichnet,**
**dass** der Durchmesser der Rotorscheibe (32) derart gewählt ist, dass diese sich radial über die Spulenkerne (23), insbesondere deren stirnseitige Polflächen (24), hinauserstreckt.

6. Elektromagnetischer Drehbetätiger, mit einem oder mehreren in etwa gleichen Umfangswinkelabständen voneinander um eine Längsmittelachse (34) gruppierten Elektromagnet-Bauelementen (21) mit jeweils einem eine Spulenwicklung (22) tragenden Spulenkern (23) mit stirnseitiger Polfläche (24) und mit einem Rotor (30, 31) mit Rotorscheibe (32), die etwa parallel zu den stirnseitigen Polflächen (24) und in Abstand davon angeordnet ist und die in gleichmäßigen Umfangswinkelabständen mit entgegengesetzter Polarität aufeinanderfolgende Permanentmagnete aufweist, die mit ihren Polflächen (33) den stirnseitigen Polflächen (24) der Spulenkerne (23) gegenüberliegend ausgerichtet sind, und mit einer am Rotor (30, 31) angreifenden Welle (25),
**dadurch gekennzeichnet,**
**dass** die Welle (25) mit dem Rotor (30, 31) nicht fest verbunden, sondern lediglich relativ beweglich, jedoch drehmomentübertragend, gekuppelt ist.

7. Elektromagnetischer Drehbetätiger nach Anspruch 6,
**gekennzeichnet durch**
eine drehmomentübertragende Kupplung (26) zwischen der Welle (25) und dem Rotor (30, 31), die ein Gelenkspiel zwischen der Welle (25) und dem Rotor (30, 31) ermöglicht.
